# FASCICULE DE BREVET EUROPEEN

(11) **EP 1 796 923 B1**
(45) Date de publication et mention de la délivrance du brevet: **26.03.2008**
(21) Numéro de dépôt: 05791259.4
(22) Date de dépôt: 21.09.2005
(51) Int. Cl.: B60C 9/22

(54) **PNEUMATIQUE DONT LE SOMMET COMPORTE UNE PLURALITE DE ZONES FORMEES AVEC UN FIL DE RENFORT CIRCONFERENTIEL**
REIFEN, DESSEN LAUFFLÄCHENKRONE MEHRERE BEREICHE UMFASST, DIE MIT EINEM UMFANGSVERSTÄRKUNGSKORD GEBILDET SIND
TYRE WHEREOF THE CROWN COMPRISES A PLURALITY OF ZONES FORMED WITH A CIRCUMFERENTIAL REINFORCEMENT CORD

(30) Priorité: 24.09.2004 FR 0410219
(43) Date de publication de la demande: 20.06.2007
(73) Titulaire: Société de Technologie Michelin, 63000 Clermont-Ferrand (FR); Michelin Recherche et Technique S.A., 1763 Granges-Paccot (CH)
(72) Inventeur: POTIN, Yves, F-63100 Clermont-Ferrand (FR)
(74) Mandataire: Dequire, Philippe Jean-Marie Denis
(86) Numéro de dépôt international: PCT/EP2005/010203
(87) Numéro de publication internationale: WO 2006/032478

(56) Documents cités:
- EP-A- 0 288 609
- EP-A- 0 344 928

## Description

La présente invention concerne un pneumatique comportant une bande de roulement avec des renforts circonférentiels dont la tension varie de façon progressive sur au moins une portion de la largeur du sommet du pneumatique. Ce type de configuration des fils de renfort de sommet permet d'obtenir des gains substantiels pour d'importantes caractéristiques d'un pneumatique, telles que l'usure, le comportement sur sol mouillé, le bruit, le confort en général.

Un tel pneumatique, correspondant au préambule de la revendication 1, est connu du document EP-A-0288609.

Les fils de renfort circonférentiels de la zone sommet sont en général directement appliqués sur une ébauche de pneumatique, vers la fin du processus d'assemblage des différents composants. Ce type de procédé d'assemblage est largement utilisé dans l'industrie du pneumatique et comporte de nombreux avantages, par exemple en terme de productivité, en particulier pour les produits de grandes ou très grandes séries. Ce type de procédé implique en général d'importantes longueurs de câbles emmagasinées dans des bobines ou rouleaux, et prêtes à être déroulées sur l'ébauche de pneumatique en cours de fabrication.

Pour poser le fil, celui-ci est guidé vers son emplacement et le fil est déroulé et appliqué, tout en ajustant graduellement la position axiale de pose, de façon à-couvrir l'ensemble de la zone sommet prévue. Un tel fil est posé sans tension, ou en légère pré-tension, mais comporte la même tension sur toute la largeur de pose.

Selon certains types de réalisation, la nature des fils varie selon la position axiale sur laquelle on se trouve. Par exemple, les diamètres peuvent varier selon la position. On peut également utiliser des fils de matériaux différents. Enfin, on connaît également certaines dispositions comportant des fils disposés avec un écartement ou pas qui varie selon la position axiale. Le document US 6 766 840 prévoit une telle disposition, avec un pas plus grand dans les zones sensibles de bordures de nappes sommets. Le document US 5 902 425 montre également un pneumatique avec un pas variable, celui-ci variant de façon à devenir de plus en plus grand vers le centre du sommet. Cette réalisation particulière est toutefois destinée aux pneumatiques pour véhicules à deux roues. Enfin, le document US 5 032 198 décrit une méthode de pose de renforts circonférentiels en prévoyant que la tension de pose varie entre les bords et la région centrale du sommet. Le fil est ainsi posé avec une tension de plus en plus élevée, à mesure qu'on se rapproche des bords.

Grâce à ces différentes astuces de fabrication, il est possible de réaliser des produits avec des caractéristiques intéressantes, et les développeurs disposent de nombreux degrés de liberté.

Toutefois, certaines contraintes subsistent, pour une part dues au procédé de fabrication utilisé. Par exemple, un fils circonférentiel posé sans tension est susceptible de se retrouver en surlongueur après cuisson. En effet, lors du moulage, les matériaux caoutchoutiques composant le pneumatique sont fortement contraints et donc écrasés. Ils peuvent occuper un volume moins important après le moulage, que lors de la pose. Or, les fils circonférentiels ne subissent pas nécessairement un rétrécissement qui permettrait de compenser intégralement cette perte de volume. Il peut donc en résulter une longueur de fil plus grande que celle nécessaire pour une situation sans tension, soit une surlongueur.

Enfin, il est d'usage pour les développeurs qui souhaitent faire varier les caractéristiques des fils de renfort de sommet en fonction de la position axiale, soit d'appliquer des couches additionnelles à certains endroits, soit d'utiliser localement des matériaux ou des pas différents. Or, la mise en oeuvre de ces caractéristiques peut s'avérer coûteuse, ou impliquer un poids supplémentaire. D'autre part, ces moyens ne permettent pas toujours d'atteindre les performances souhaitées pour certains types de produit pour lesquels les exigences techniques sont élevées. Il serait donc utile pour les développeurs souhaitant optimiser certaines caractéristiques architecturales de disposer d'autres moyens de réglages.

Pour pallier ces différents inconvénients, l'invention propose un pneumatique comportant au moins une structure de renfort de type carcasse ancrée de chaque côté dudit pneumatique dans un bourrelet dont la base est destinée à être montée sur un siège de jante, chacun desdits bourrelets s'étendant sensiblement radialement extérieurement sous la forme de flancs, les flancs rejoignant radialement vers l'extérieur une bande de roulement, la structure de renfort de type carcasse s'étendant circonférentiellement depuis le bourrelet vers ledit flanc, une armature de sommet, chacun des bourrelets comportant par ailleurs une zone d'ancrage permettant le maintien de la structure de renfort, ladite armature de sommet comportant un fil disposé circonférentiellement de façon à former une pluralité de tours dans lesquels la tension circonférentielle est susceptible de varier en fonction de la position axiale du fil de façon à former au moins deux zones latérales de variation de tension dans lesquelles la tension varie de façon inverse, depuis une valeur de tension de bordure Tb avec une valeur de la tension diminuant en se dirigeant axialement vers le centre jusqu'à atteindre un premier point d'inflexion
dans lequel la valeur de la tension correspond à la tension d'inflexion Tinf, les zones latérales étant séparées par au moins une zone médiane dans laquelle, en partant dudit premier point d'inflexion et en se dirigeant axialement centralement, la tension augmente jusqu'à une valeur de tension de zone médiane Tmed, supérieure à celle de la tension d'inflexion Tinf, puis diminue jusqu'à la tension d'inflexion Tinf de l'autre côté de la section médiane du sommet, au niveau du second point d'inflexion 1, situé de l'autre côté de la section médiane du sommet.

Un tel pneumatique possède des qualités de -comportement et d'endurance supérieures à un pneu à sommet renforcé de type connu. En outre, on remarque une augmentation de la surface de l'aire de contact sur les côtés du pneumatique, ce qui favorise le comportement du pneumatique.

Ce type de pneumatique peut être réalisé par exemple grâce à un pilotage ou contrôle sensiblement continu de la tension de pose du fil circonférentiel.

En outre, en posant le fil circonférentiel avec une certaine prétension, on peut éviter la situation dans laquelle un tel fil se retrouve en surlongueur après cuisson du pneumatique.

Selon un mode de réalisation avantageux, la zone médiane est disposée sensiblement axialement centralement.

Selon un autre mode de réalisation avantageux, la tension circonférentielle varie de façon sensiblement symétrique de chaque coté de la section médiane du pneumatique.

Selon encore un autre un mode de réalisation avantageux, la tension Tint de la zone intermédiaire est sensiblement constante sur une pluralité des tours (au moins quatre tours - et selon un exemple avantageux sur une largeur sommet d'envi ron 45 mm-)

Selon un exemple de réalisation avantageux de l'invention, la tension Tmed est inférieure à la tension Tb.

Selon un autre exemple de réalisation avantageux de l'invention, la tension Tmed est supférieure à la tension Tb.

La zone intermédiaire comporte avantageusement une portion centrale constituée d'une pluralité de tours dans laquelle la tension a une valeur de tension de portion centrale Tpc, différente (inférieure ou supérieure) à la tension médiane Tmed. Selon un exemple de réalisation, la valeur de Tpc est sensiblement nulle.

De manière avantageuse, la tension circonférentielle des zones de variation de tension varie de façon sensiblement linéaire sur au moins une portion d'une zone.

Selon divers modes de réalisation de l'invention, le pas de pose est sensiblement le même dans une zone donnée, et/ou il n'est pas identique dans toutes les zones.

De manière avantageuse, le pneumatique selon l'invention comporte un seul fil circonférentiel sur lequel le profil de variation de tension est appliqué. Ceci confère des avantages au niveau tu temps de pose, des ajustements et réglages, qui sont optimisés, par rapport à une pose à plusieurs fils disposés côte à côte. La profil de tension sont par ailleurs mieux contrôlés.

Dans la présente description, le terme "fil" désigne en toute généralité aussi bien des monofilaments que des multifilaments ou des assemblages comme des câbles, des retors ou encore tout type d'assemblage équivalent, et ceci, quels que soient la matière et le traitement de ces fils. Il peut s'agir par exemple de traitements de surface, enrobage ou pré-encollage pour favoriser l'adhérence sur le caoutchouc. L'expression « fil unitaire » désigne un fil composé d'un seul élément, sans assemblage. Le terme « multifilaments » désigne au contraire un assemblage d'au moins deux éléments unitaires pour former un câble, un retors, etc.

On entend par « fils circonférentiels » des fils disposés sensiblement à zéro de grés par rapport à la direction de rotation du pneumatique.

Par « caractéristiques du fil », on entend par exemple ses dimensions, sa composition, ses caractéristiques et propriétés mécaniques (notamment le module), ses caractéristiques et propriétés chimiques, etc.

Pour rappel, "radialement vers le haut", ou "radialement supérieur" ou "radialement extérieurement" signifie vers les plus grands rayons.

Tous les détails de réalisation sont donnés dans la description qui suit, complétée par les figures 1 à 7 dans lesquelles:
- la figure 1 présente un profil d'une coupe d'un sommet d'un pneumatique dans lequel on aperçoit les fils circonférentiels, cette coupe étant mise en relation avec un graphique illustrant un profil de tension de pose d'un fil circonférentiel ;
- la figure 2 présente un le profil de tension de pose de l'exemple de la figure 1 ;
- la figure 3 présente une variante du profil de tension de pose de l'exemple de la figure 1 comportant une portion centrale avec une tension dont la valeur est inférieure à celle de la zone médiane ;
- la figure 4 présente une autre variante du profil de tension de pose de l'exemple de la figure 1, comportant une portion centrale avec une tension dont la valeur est sensiblement nulle ;
- la figure 5 présente une autre variante du profil de tension de pose de l'exemple de la figure 1 comportant une portion centrale avec une tension dont la valeur est supérieure à celle de la zone médiane ;
- la figure 6 présente une variante du profil de tension de pose de l'exemple de la figure 1, comportant une portion centrale avec une tension dont la valeur est inférieure à la fois à celle de la zone médiane et à celle des bordures ;
- la figure 7 présente une variante du profil de tension de pose de l'exemple de la figure 1 dont les zones latérales de variation de tension ne sont pas linéaires.

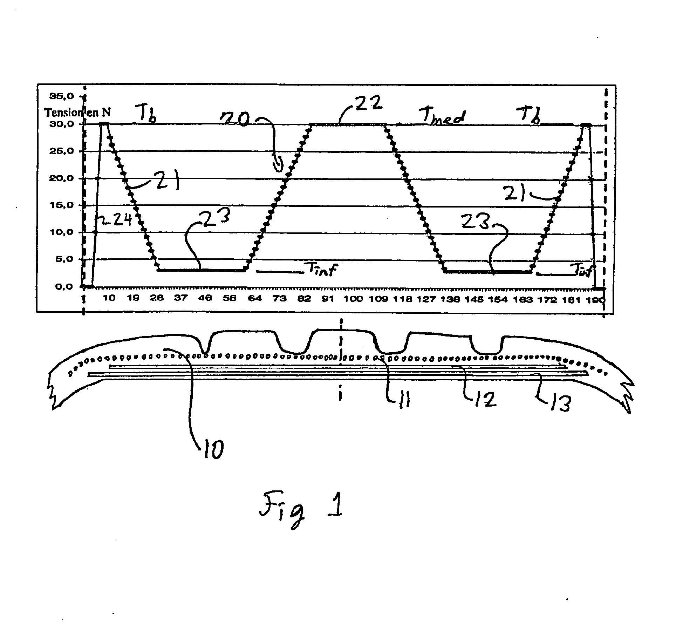

La figure 1 illustre un exemple de répartition axiale des fils circonférentiels au niveau du sommet d'un pneumatique. La portion du bas de la figure montre un exemple de réalisation d'une zone du sommet d'un pneumatique, avec deux couches de renforts sommet, soit une couche de renfort sommet radialement extérieure 12 et une-couche de renfort sommet radialement intérieure 13 et une série de renforts circonférentiels 11 disposés radialement extérieurement à ces deux couches 12 et 13. Le graphique situé au dessus de cette portion de pneumatique présente un exemple de la valeur ou du profil de la tension de pose 20 du fil en fonction de sa position axial le long du sommet. Plus en détails, on retrouve en abscisse la position axiale du fil, et en ordonnée, un exemple de tension appliquée lors de la pose, en Newtons. La position axiale est donnée par une numérotation de chacun des tours faits par le fil, du premier tour, à gauche de la figure, jusqu'au 190^{e} tour, à droite de la figure. Dans cet exemple, le nombre de tours total est de 190. Dans d'autres exemples de réalisation, ce nombre total de tour, de même que le pas de pose, peuvent varier selon une quasi-infinité de possibilité, sans sortir du cadre de la présente invention.

Selon cet exemple, les premiers tours sont posés à tension de bordure Tb sensiblement élevée, dans cet exemple aux environs de 30 N. Puis, dans une zone latérale 21 de variation de tension, la tension de pose diminue graduellement, jusqu'à atteindre une zone d'inflexion 23, dans laquelle la tension a une valeur d'inflexion Ti, inférieure à Tb, soit environ 4 N dans cet exemple. La valeur de la tension de pose remonte ensuite graduellement au fur et à mesure que l'on se dirige vers la portion ou zone médiane 22 du pneumatique. Dans cet exemple, la tension varie sensiblement linéairement. Vers le 73^{e} tour, la zone médiane 20 est atteinte, et les fils sont posés sur plusieurs tours avec sensiblement la même tension de pose. Dans cet exemple, environ 40 tours constituent la portion médiane. Le niveau de tension de cette zone se situe autour de 30 Newtons.

En poursuivant l'étude de cette même figure, on remarque qu'à droite de la zone médiane, la tension de pose du fil circonférentiel diminue, depuis la valeur de la tension médiane, soit environ 30 N, vers une valeur de plus en plus faible, selon une régression sensiblement linéaire, jusqu'à une seconde valeur de tension d'inflexion Ti, à laquelle la tension est sensiblement stable sur plusieurs tours. La valeur de la tension de pose remonte enfin depuis la valeur Ti jusqu'à une valeur Tb, pour les enroulements situés à proximité de la bordure du sommet.

Le profil de tension de pose du fil forme ainsi une sorte de «W ». Dans cet exemple, le profil de tension est sensiblement symétrique par rapport à la section centrale du pneumatique. On obtient ainsi un profil de tension en forme de U de chaque côté de la section centrale du pneumatique.

Dans cet exemple de réalisation, la valeur de la tension Ti est sensiblement constante sur environ 30 tours.

Selon diverses variantes, un ou plusieurs paramètres peuvent varier, tel que : le pas de pose, le taux de variation de la tension, la largeur relative des diverses portions, à savoir les zones latérales de variation de tension et la zone médiane, les valeurs maximales et minimales de la tension, etc. Les développeurs disposent donc d'un outil de conception d'une très grande souplesse, permettant de s'adapter à de nombreux types de produits, et pour optimiser différents paramètres du produit.

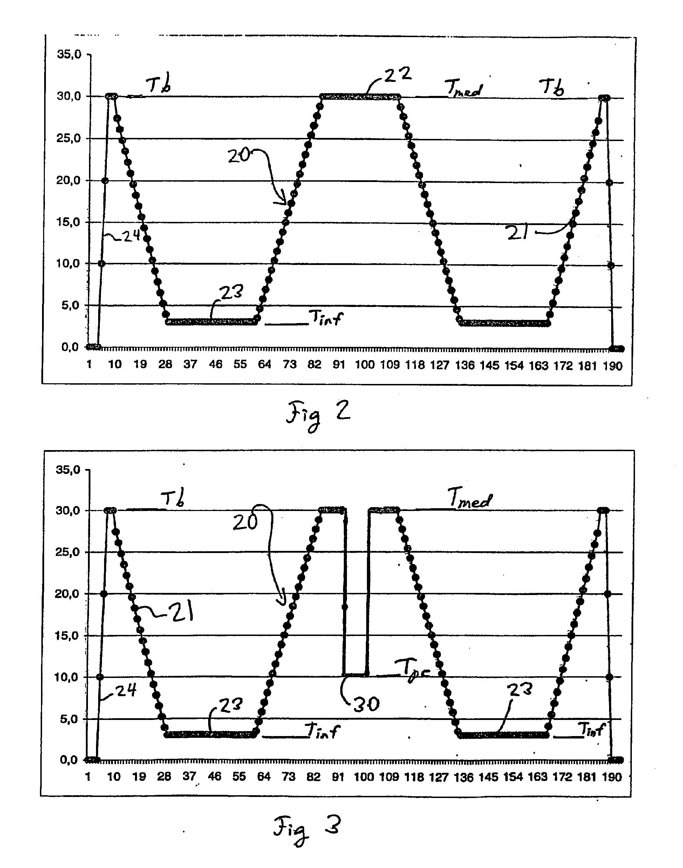

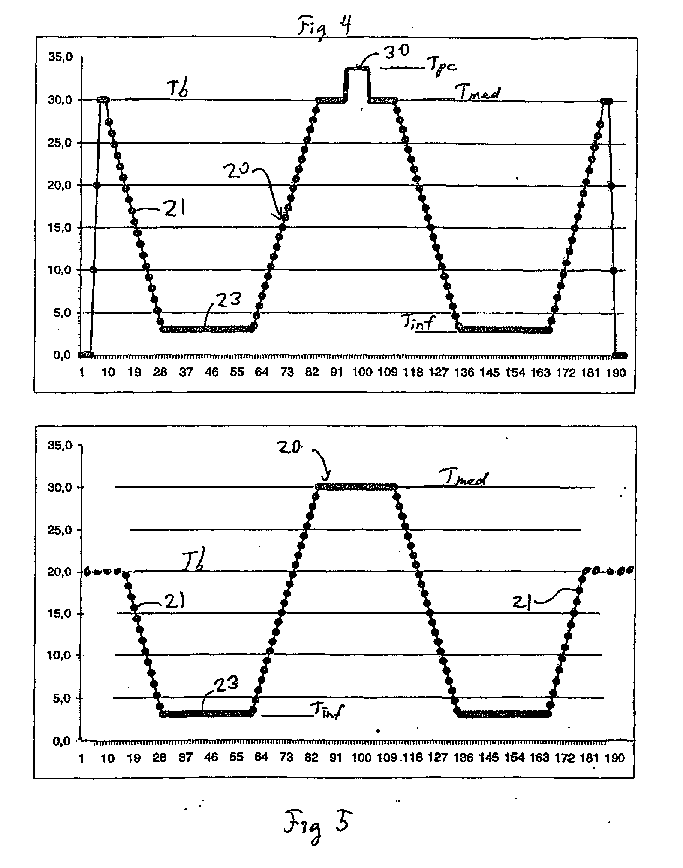

La figure 2 illustre une représentation du profil de tension d'un fil circonférentiel pour l'exemple de réalisation de la figure 1. Les figures 3 à 5 présentent des variantes de cet exemple, dans laquelle la zone médiane comporte une portion centrale 30, d'une largeur de quelques tours, dans laquelle la tension de pose Tpc est sensiblement différente de la valeur de tension de la zone médiane. Par exemple, à la figure 3, la valeur de Tpc est sensiblement inférieure à la valeur de Tm (environ 10N), mais supérieure à zéro N. Bien entendu, Tpc peu aussi avoir une valeur sensiblement nulle. A la figure 4, Tpc est sensiblement supérieure à Tm (environ 35 N par rapport à 30N).

Dans l'exemple de réalisation de la figure 5, la valeur de Tmed est supérieure à Tb, la tension en bordure. En effet, dans cet exemple, les bordures de sommet comportent des portions dans lesquelles la tension de pose est sensiblement constante, dans cet exemple autour de 20 N, sur une largeur de quelques tours.

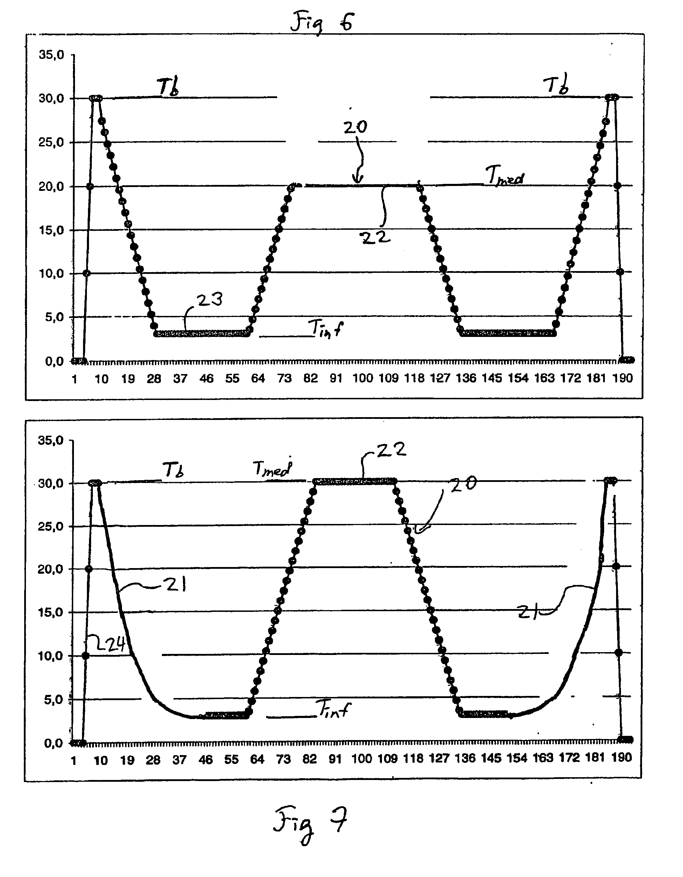

Dans l'exemple de réalisation de la figure 6, la valeur de Tmed est inférieure à Tb, la tension en bordure. En effet, dans cet exemple, la zone médiane 22 comporte une valeur de tension Tmed autour de 20 N, donc inférieure à celle de Tb, qui se situe autour de 30 N.

Le mode de réalisation de la figure 7 diffère en ce que le taux de variation de tension d'au moins une des zones latérales 21, entre les bordures et la zone médiane 22 n'est pas linéaire. Dans l'exemple illustré, il forme un profil concave. Selon une variante, ce profil résulte en une forme convexe. Enfin, diverses variantes de combinaisons sont possible avec des portions concaves et convexes d'un même côté de la portion médiane, ou encore un côté concave et l'autre convexe.

Dans l'exemple illustré à la figure 1, une armature de sommet est constituée par exemple de deux couches de fils de renfort 12 et 13 disposés selon des angles sensiblement égaux mais inverses. Bien sûrs, d'autres types d'arrangements peuvent être utilisés sans sortir du cadre de la présente invention. Ainsi, le nombre de couches, les angles utilisés ainsi que les types de fils peuvent être différents.

La fabrication industrielle d'un pneumatique selon l'invention peut être réalisée selon plusieurs types de procédés. De manière avantageuse, on utilise un principe de pose sur noyau central permettant soit la pose individuelle des éléments constituants tels les mélanges caoutchoutiques et les renforts (fils) ou encore la pose de produits semi-finis tels des lamelles caoutchoutiques renforcées.

## Revendications

1. Pneumatique comportant au moins une structure de renfort de type carcasse ancrée de chaque côté dudit pneumatique dans un bourrelet dont la base est destinée à être montée sur un siège de jante, chacun desdits bourrelets s'étendant sensiblement radialement extérieurement sous la forme de flancs, les flancs rejoignant radialement vers l'extérieur une bande de roulement, la structure de renfort de type carcasse s'étendant circonférentiellement depuis le bourrelet vers ledit flanc, une armature de sommet, chacun des bourrelets comportant par ailleurs une zone d'ancrage permettant le maintien de la structure de renfort, ladite armature de sommet comportant un fil (11) disposé circonférentiellement de façon à former une pluralité de tours dans lesquels la tension circonférentielle est susceptible de varier en fonction de la position axiale du fil (11) de façon à former au moins deux zones latérales (21) de variation de tension dans lesquelles la tension varie de façon inverse, depuis une valeur de tension de bordure Tb avec une valeur de la tension diminuant en se dirigeant axialement vers le centre jusqu'à atteindre un premier point d'inflexion 1 dans lequel la valeur de la tension correspond à la tension d'inflexion Tinf **caractérisé en ce que** les bordures étant séparées par au moins une zone médiane (20) dans laquelle, en partant dudit premier point d'inflexion et en se dirigeant axialement centralement, la tension augmente jusqu'à une valeur de tension de zone médiane Tmed, supérieure à celle de la tension d'inflexion Tinf, puis diminue jusqu'à la tension d'inflexion Tinf de l'autre côté de la section médiane du sommet, au niveau du second point d'inflexion I, situé de l'autre côté de la section médiane du sommet.

2. Pneumatique selon la revendication 1, dans lequel la zone médiane (20) est disposée sensiblement axialement centralement.

3. Pneumatique selon l'une des revendications 1 ou 2, dans lequel la tension circonférentielle varie de façon sensiblement symétrique de chaque coté de la section médiane du pneumatique.

4. Pneumatique selon l'une des revendications 1 à 3, dans lequel la tension Tmed de la zone médiane (20) est sensiblement constante sur une pluralité des tours.

5. Pneumatique selon l'une des revendications 1 à 4, dans lequel la tension Tmed est inférieure à la tension Tb.

6. Pneumatique selon l'une des revendications 1 à 4, dans lequel la tension Tmed est supérieure à la tension Tb:

7. Pneumatique selon l'une des revendications précédentes, dans lequel la zone médiane (20) comporte une portion centrale constituée d'une pluralité de tours dans laquelle la tension a une valeur de tension de portion centrale Tpc, différente de la tension médiane Tmed.

8. Pneumatique selon l'une des revendications précédentes, dans lequel la tension circonférentielle des zones de variation de tension varie de façon sensiblement linéaire sur au moins une portion d'une zone.

9. Pneumatique selon l'une des revendications précédentes, comportant un seul fil (11) circonférentiel sur lequel le profil de variation de tension est appliqué.

## Claims

1. A tyre comprising at least one carcass-type reinforcement structure anchored on each side of said tyre in a bead whose base is intended to be fitted on a rim seat, each of said beads being extended substantially radially on the outside in the form of sidewalls, the sidewalls meeting up radially towards the outside with a tread, the carcass-type reinforcement structure extending circumferentially from the bead towards said sidewall, a crown reinforcement, each of the beads moreover comprising an anchoring zone allowing the reinforcement structure to be held in place, said crown reinforcement comprising a thread (11) disposed circumferentially so as to form a plurality of turns in which the circumferential tension is capable of varying as a function of the axial position of the thread (11) so as to form at least two lateral tension variation zones (21) in which the tension varies inversely, from an edge tension value Tb with a tension value diminishing axially towards the centre until a first inflection point I is reached in which the value of the tension corresponds to the inflection tension Tinf, **characterised in that** the edges are separated by at least one median zone (20) in which, starting from said first inflection point and taking an axially central direction, the tension increases up to a median zone tension value Tmed, greater than that of the inflection tension Tinf, then diminishes down to the inflection tension Tinf on the other side of the median section of the crown, at the level of the second inflection point I, situated on the other side of the median section of the crown.

2. A tyre according to claim 1, in which the median zone (20) is disposed in substantially axially central arrangement.

3. A tyre according to one of claims 1 or 2, in which the circumferential tension varies substantially symmetrically on each side of the median section of the tyre.

4. A tyre according to one of claims 1 to 3, in which the tension Tmed of the median zone (20) is substantially constant over a plurality of turns.

5. A tyre according to one of claims 1 to 4, in which the tension Tmed is less than the tension Tb.

6. A tyre according to one of claims 1 to 4, in which the tension Tmed is greater than the tension Tb.

7. A tyre according to one of the preceding claims, in which the median zone (20) comprises a central portion consisting of a plurality of turns in which the tension has a central portion tension value Tpc different from the median tension Tmed.

8. A tyre according to one of the preceding claims, in which the circumferential tension of the tension variation zones varies in substantially linear manner over at least one portion of one zone.

9. A tyre according to one of the preceding claims, comprising a single circumferential thread (11) to which the tension variation profile is applied.

## Patentansprüche

1. Reifen, umfassend mindestens eine Verstärkungsstruktur vom Karkassentyp, der auf jeder Seite des Reifens in einem Wulst verankert ist, dessen Basis dazu bestimmt ist, auf einem Felgensitz montiert zu werden, wobei sich jeder der Wülste im Wesentlichen radial nach außen in Form von Seitenwänden erstreckt, wobei die Seitenwände radial außen an eine Lauffläche angrenzen, wobei sich die Verstärkungsstruktur vom Karkassentyp am Umfang vom Wulst zur Seitenwand, erstreckt, sowie eine Zenitbewehrung, wobei jeder der Wülste überdies eine Verankerungszone umfasst, die den Halt der Verstärkungsstruktur ermöglicht, wobei die Zenitbewehrung einen Draht (11) umfasst, der am Umfang derart angeordnet ist, daß er eine Vielzahl von Umdrehungen bildet, in denen die Umfangsspannung in Abhängigkeit von der Axialposition des Drahtes (11) variieren kann, und zwar derart, daß mindestens zwei seitliche Spannungsvariationszonen (21) gebildet werden, in denen die Spannung auf umgekehrte Weise, ausgehend von einem Spannungswert am Rand Tb variiert, wobei der Spannungswert in Axialrichtung zur Mitte hin abnimmt, bis er einen ersten Inflexionspunkt I erreicht, an dem der Wert der Spannung der Inflexionsspannung Tinf entspricht, **dadurch gekennzeichnet, dass** die Ränder durch mindestens eine Mittelzone (20) getrennt sind, in der die Spannung ausgehend vom ersten Inflexionspunkt in Axialrichtung zur Mitte hin bis auf einen Spannungswert der Mittelzone Tmed steigt, der größer als jener der Inflexionsspannung Tinf ist, und dann bis zur Inflexionsspannung Tinf auf der anderen Seite des Mittelquerschnitts de Zenits im Bereich des zweiten Inflexionspunktes I, der sich auf der anderen Seite des Mittelquerschnitts des Zenits befindet, abnimmt.

2. Reifen nach Anspruch 1, bei dem die Mittelzone (20) im Wesentlichen axial mittig angeordnet ist.

3. Reifen nach einem der Ansprüche 1 oder 2, bei dem die Umfangsspannung im Wesentlichen symmetrisch auf jeder Seite des Mittelquerschnitts des Reifens variiert.

4. Reifen nach einem der Ansprüche 1 bis 3, bei dem die Spannung Tmed der Mittelzone (20) im Wesentlichen auf einer Vielzahl von Umdrehungen konstant ist.

5. Reifen nach einem der Ansprüche 1 bis 4, bei dem die Spannung Tmed kleiner als die Spannung Tb ist.

6. Reifen nach einem der Ansprüche 1 bis 4, bei dem die Spannung Tmed größer als die Spannung Tb ist.

7. Reifen nach einem der vorhergehenden Ansprüche, bei dem die Mittelzone (20) einen mittigen Abschnitt umfasst, der von einer Vielzahl von Umdrehungen gebildet ist, in dem die Spannung einen Spannungswert des Mittelabschnitts Tpc hat, der sich von der Mittelspannung Tmed unterscheidet.

8. Reifen nach einem der vorhergehenden Ansprüche, bei dem die Umfangsspannung der Spannungsvariationszonen im Wesentlichen linear auf mindestens einem Abschnitt einer Zone variiert.

9. Reifen nach einem der vorhergehenden Ansprüche, umfassend einen einzigen Umfangsdraht (11), auf den das Spannungsvariationsprofil angewandt wird.
